# EUROPEAN PATENT SPECIFICATION

(11) **EP 3 955 070 B1**
(45) Date of publication and mention of the grant of the patent: **09.10.2024**
(21) Application number: 21189793.9
(22) Date of filing: 05.08.2021
(51) Int. Cl.: G05B 19/406, G05B 19/409, G05B 19/418

(54) **WORK SUPPORT APPARATUS AND WORK SUPPORT METHOD**
WERKSTÜCKHALTEVORRICHTUNG UND WERKSTÜCKHALTEVERFAHREN
APPAREIL DE SUPPORT DE TRAVAIL ET PROCÉDÉ DE SUPPORT DE TRAVAIL

(30) Priority: 13.08.2020 JP 2020136735
(43) Date of publication of application: 16.02.2022
(73) Proprietor: Hitachi, Ltd., Tokyo 100-8280 (JP)
(72) Inventor: KUMON, Taku, Tokyo, 100-8280 (JP); HIRAI, Riu, Tokyo, 100-8280 (JP)
(74) Representative: MERH-IP Matias Erny Reichl Hoffmann Patentanwälte PartG mbB

(56) References cited:
- WO-A1-2015/045851
- WO-A1-2019/186848
- US-A1- 2018 374 026

## Description

### CLAIM OF PRIORITY

The present application claims priority from Japanese patent application JP 2020-136735 filed on August 13, 2020.

### BACKGROUND OF THE INVENTION

### 1. Field of the Invention

The present invention relates to a work support apparatus and a work support method.

### 2. Description of the Related Art

The production work in the factory includes a plurality of processes. Specifically, for example, machining work includes a plurality of processes including material mounting, tool mounting, coordinate adjusting, crude processing, and finishing. Abnormal events such as a short-time machine stop known as a moment stop and abnormal vibration of a cutting tool during machining frequently occur in a machining production site. The ability to immediately cope with work change such as process switching and abnormal occurrences affects greatly on work efficiency, production cost, and safety at the production site.

In recent years, while the proportion of inexperienced workers such as foreign workers has increased with the decrease in the domestic workforce, the aging of skilled workers has reduced the number of experienced skilled workers excellent in coping with work change, and has reduced the number of educators for unskilled workers. Therefore, it has been difficult to increase the growth rate of the unskilled workers while securing the working time of the skilled workers. Therefore, there is a need for a work support system that makes unskilled workers grow into skilled workers without disturbing the skilled workers' works.

Background technologies of the present technical field include JP 2019-3545 A and JP 2006-209259 A. JP 2019-3545 A describes "A manipulation support device comprises: an event information acquisition part for acquiring event information relating to an event occurring during the operation of a plant; a phenomenon information acquisition part for acquiring phenomenon information relating to a phenomenon detected in the plant; a perception information acquisition part for acquiring perception information relating to a perception recognized by an operator; an operation information acquisition part for acquiring operation information relating to the operation of the plant performed by the operator; an extraction part for extracting a correlation between the event information and at least one of the phenomenon information, the perception information, or the operation information; and a solution generation part for generating a solution supporting the operation of the plant on the basis of the extracted correlation." (see Abstract).

JP 2006-209259 A describes "Real operation information acquired by a real operation information acquiring part is collated with each ideal operation information stored in an ideal operation relevant information storing part, and an operation which is being actually performed by an operator is specified based on the collation result, and an operation stage which is being executed at present by the operator in the operation is traced. Furthermore, a point of time when the operator is puzzled by an operation procedure is detected based on the change of the matching of the actual operation information accompanied with the lapse of the operation stage and the ideal operation information, and guidance information is presented to an operator by limiting to that timing." (see Abstract).
In addition, in WO 2015/045 851 A1 a work support system and method is described that detects an abnormality within a system and introduces it to a worker. More specifically, the cited system incorporates a number of sensors which are capable of identifying an abnormal behavior and sending a signal to a terminal device to notify an operator. Further, the operator is introduced to potential solution step using a portable display device.

### SUMMARY OF THE INVENTION

However, the technologies described in JP 2019-3545 A and JP 2006-209259 A provide support in accordance with the skill level even if a change occurs in a process or a procedure, and hence the technologies provide excessive support to workers aware of the change, and work efficiency drops.

Specifically, the technology described in JP 2019-3545 A is not intended to change the support contents by an operation different from the ideal value or change the support contents depending on whether or not the worker is aware of the work change. That is, the technology described in JP 2019-3545 A provides support in accordance with the skill level regardless of whether or not the worker is aware of the work change.

In other words, the technology described in JP 2019-3545 A provides excessive support when the unskilled worker is aware of the work change, which may reduce the work efficiency and motivation of the unskilled worker, and may not lead to growth. In addition, if the skilled worker is unaware of an abnormality, the support becomes insufficient, and there is a possibility that a large loss is caused by the abnormality.

The technology described in JP 2006-209259 A does not perform detecting a work change, changing the support contents in accordance with the contents of the work change, and changing the support contents depending on whether or not the work change is noticed. In other words, the technology described in JP 2006-209259 A causes concern that a decrease in work efficiency and a decrease in motivation due to unnecessary guidance notification when the worker is aware of the work change, and hinders the growth of the worker.

Therefore, an object of one aspect of the present invention is to provide support by recognizing whether the worker is aware of an appropriate work to perform at that time point, and successfully increase the growth rate of the unskilled worker and further improve work efficiency.

In order to solve the above problems, the subject matter of the herein introduced independent claims are suggested. Dependent claims describe favorable embodiments of the present invention.

One aspect of the present invention can provide support by recognizing whether the worker is aware of an appropriate work to perform at that time point, and successfully increase the growth rate of the unskilled worker and further improve work efficiency.

Problems, configurations, and effects other than those described above will be made clear by the description of the following embodiments.

### BRIEF DESCRIPTION OF THE DRAWINGS

Fig. 1 is an explanatory view illustrating a configuration example of a work support system according to a first embodiment;
Fig. 2 is a block diagram illustrating a configuration example of a management server according to the first embodiment;
Fig. 3 is an example of a work determination table according to the first embodiment;
Fig. 4 is an example of a work support table according to the first embodiment;
Fig. 5 is a flowchart example illustrating an example of work support processing according to the first embodiment;
Fig. 6 is an example of a display screen when a determination [A] according to the first embodiment is made;
Fig. 7 is an example of a display screen when a determination [B] according to the first embodiment is made;
Fig. 8 is an example of a display screen when a determination [C] according to the first embodiment is made; and
Fig. 9 is an example of a work support log display screen according to the first embodiment.

### DESCRIPTION OF THE PREFERRED EMBODIMENTS

Embodiments of the present invention will be described in detail below with reference to the accompanying drawings. In the present embodiment, the same components are in principle given the same reference numerals, and a repeated description thereof will be omitted. Note that the present embodiment is merely an example for achieving the present invention and does not limit the technical scope of the present invention.

### First embodiment

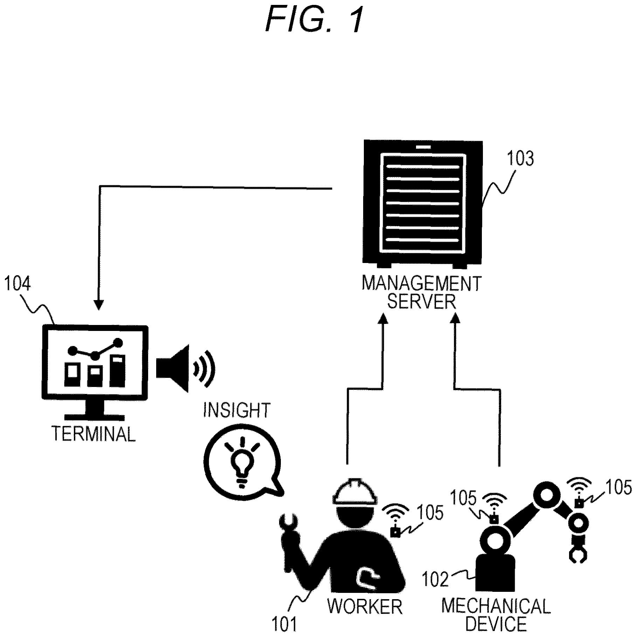

Fig. 1 is an explanatory view illustrating a configuration example of a work support system. The work support system includes, for example, a mechanical device 102, a management server 103, a terminal 104, and a plurality of sensors 105.

The mechanical device 102 and the terminal 104 are installed in, for example, a production work site such as a factory, and the management server 103 is installed in, for example, a production work site of a factory or a cloud environment (i.e., a base different from the production work site). The mechanical device 102 is, for example, an apparatus that performs a production work such as a machining device, an assembly device, solder, a brazing device, a design device, a weighing device, a transportation device, an inspection device, and a packaging device. In the production work site, there is a worker 101 who performs work in the production work site of the factory.

The sensors 105 include, for example, a heartbeat sensor and a current sensor, and each sensor 105 is attached to, for example, the worker 101, the mechanical device 102, or a production work site. The terminal 104 and the sensors 105 are communicably connected to the management server 103 via a wired or wireless network such as the Internet, a local area network (LAN), or a wide area network (WAN).

The management server 103 transmits, to the terminal 104, the processing result of the work support generated based on the information received from each sensor. The terminal 104 is, for example, a computer having a display device, a speaker device, and a projection mapping function, and outputs the work support received from the management server 103. Accordingly, for example, when the appropriate work for the worker 101 to perform at that time point changes, the terminal 104 can provide the worker 101 with insight such as notification of abnormality occurrence or notification of process change.

The example in Fig. 1 includes one worker 101 and one mechanical device 102, but a plurality of workers 101 and a plurality of mechanical devices 102 each equipped with the sensor 105 may exist. The number of sensors 105 provided in the worker 101 and the mechanical device 102 is discretionary.

Similarly, a plurality of terminals 104 connected to the management server 103 may also exist. Furthermore, a plurality of management servers 103 having similar functions may also exist in accordance with needs such as calculation processing conditions and location conditions such as edges and clouds. The management server 103 and the terminal 104 may not be separate devices, and the terminal 104 may be an output device (display device) included in the management server 103.

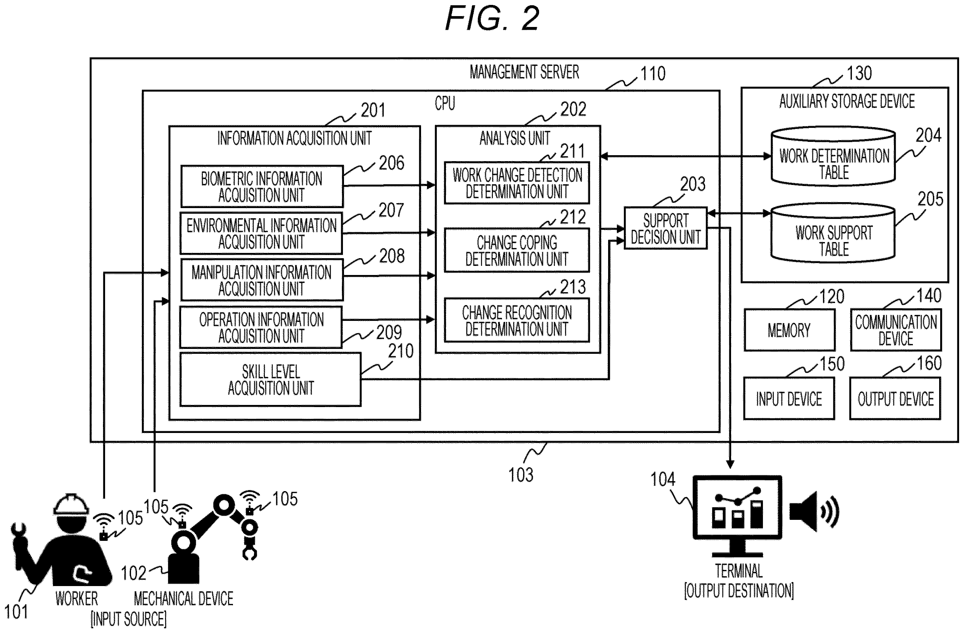

Fig. 2 is a block diagram illustrating a configuration example of the management server 103. The management server 103 includes, for example, a computer having a control processing unit (CPU) 110, a memory 120, an auxiliary storage device 130, a communication device 140, an input device 150, and an output device 160.

The CPU 110 includes a processor and executes a program stored in the memory 120. The memory 120 includes a read only memory (ROM), which is a nonvolatile storage element, and a random access memory (RAM), which is a volatile storage element. The ROM stores an immutable program (e.g., basic input/output system (BIOS)) and the like. The RAM is a high-speed, volatile storage element such as a dynamic random access memory (DRAM), and temporarily stores a program to be executed by the CPU 110 and data to be used when the program is executed.

The auxiliary storage device 130 is, for example, a large-capacity, nonvolatile storage device such as a magnetic storage device (hard disk drive (HDD)) and a flash memory (solid state drive (SSD)), and stores a program to be executed by the CPU 110 and data to be used when the program is executed. That is, the program is read from the auxiliary storage device 130, loaded into the memory 120, and executed by the CPU 110.

The communication device 140 is a network interface device that controls communication with other devices in accordance with a predetermined protocol. The input device 150 is an apparatus that receives an input from the operator, and is an apparatus such as a keyboard or a mouse, for example. The output device 160 is an apparatus that outputs the execution result of the program in a form visually recognizable to the operator, and is a display device such as a monitor device or a printer, for example.

The program executed by the CPU 110 is provided to the management server 103 via a removable medium (CD-ROM, flash memory, or the like) or a network, and stored in the nonvolatile auxiliary storage device 130, which is a non-temporary storage medium. For this reason, the management server 103 preferably has an interface for reading data from a removable medium.

The management server 103 is a computer system configured on one physical computer or on a plurality of logically or physically configured computers, and may operate on separate threads on the same computer or may operate on a virtual computer constructed on a plurality of physical computer resources. The same is true for the terminal 104.

The CPU 110 includes an information acquisition unit 201, an analysis unit 202, and a support decision unit 203, each of which is a functional unit. The information acquisition unit 201 includes a biometric information acquisition unit 206, an environmental information acquisition unit 207, a manipulation information acquisition unit 208, an operation information acquisition unit 209, and a skill level acquisition unit 210, each of which is a functional unit.

The information acquisition unit 201 acquires information from each sensor equipped to the worker 101 and the mechanical device 102, and transmits the information to the analysis unit 202. More specifically, for example, the biometric information acquisition unit 206 acquires information from the sensor 105 that measures biometric information of the worker 101 such as the line of sight, the pupil, the heartbeat, and the brain waves.

For example, the environmental information acquisition unit 207 acquires information from the sensor 105 that measures environmental information on the surroundings of the worker 101 and the mechanical device 102 such as the worker position, the process performed by the worker 101, the environmental sound at the position where the worker 101 or the mechanical device 102 is arranged, and the temperature and humidity at the position where the worker 101 or the mechanical device 102 is arranged.

For example, the manipulation information acquisition unit 208 acquires information from the sensor 105 that measures manipulation information on the mechanical device 102 such as button manipulation and dial manipulation. The operation information acquisition unit 209 acquires operation information on the mechanical device 102 such as information from the sensor 105 that measures load, electric power, vibration, and the like, and alert information.

The skill level acquisition unit 210 acquires skill level information of the worker 101. The information acquisition unit 201 synchronously transmits, to the analysis unit 202, information acquired by each functional unit included in the information acquisition unit 201.

The analysis unit 202 performs analysis by collating the information received from the information acquisition unit 201 with a work determination table 204 described later, and transmits the analysis result to the support decision unit 203. The analysis unit 202 includes a work change detection determination unit 211, a change coping determination unit 212, and a change recognition determination unit 213.

The work change detection determination unit 211 performs a determination in real time to detect a change in an appropriate work for the worker 101 to perform at that time due to an abnormality occurrence, process switching, or the like. The change coping determination unit 212 determines whether or not the worker 101 copes with a work change. The change recognition determination unit 213 determines whether or not the worker 101 is aware of the work change.

Note that the work change is a concept including transition of a process during execution included in the work to another process, occurrence of an abnormality in a process, and elimination of the abnormality generated in the process and returning to normal. The occurrence of an abnormality may not be limited to an actual occurrence of an abnormality but may include an appearance of a sign of the occurrence of an abnormality.

The support decision unit 203 collates the analysis result (determination result) received from the analysis unit 202, the skill level information received from the skill level acquisition unit 210, and a work support table 205 described later, thereby executing the processing of deciding the support content for the worker 101, and transmitting the processing result to the terminal 104 and/or the output device 160.

The skill level acquisition unit 210 acquires the skill level of the worker 101. The auxiliary storage device 130 stores in advance a table in which the skill level is defined for each ID identifying the worker 101, for example, and the skill level acquisition unit 210 acquires the skill level of the worker 101 by referring to the table.

For example, the skill level acquisition unit 210 may calculate the skill level of the worker 101 (each time a sensor value is acquired) by substituting, into a predetermined determination function, the sensor values acquired by the biometric information acquisition unit 206, the environmental information acquisition unit 207, the manipulation information acquisition unit 208, and the operation information acquisition unit 209.

Note that not the information acquisition unit 201 but the analysis unit 202 may perform time synchronization of the data acquired by the information acquisition unit 201, and the information acquisition unit 201 or the analysis unit 202 may decide the time when the data reaches the information acquisition unit 201 or the analysis unit 202 as time stamp information of the data, and the analysis unit 202 may use the time stamp information for processing. For example, assuming that all the sensors 105 provided in the worker 101 and the mechanical device 102 have already performed time synchronization, the analysis unit 202 may use, for processing, the time stamp information provided by each sensor.

For example, the CPU 110 functions as the information acquisition unit 201 by operating in accordance with the information acquisition program loaded into the memory 120, and functions as the analysis unit 202 by operating in accordance with the analysis program loaded into the memory 120. The relationship between the program and the functional unit is the same for other functional units included in the CPU 110.

Note that some or all of the functions of the functional units included in the CPU 110 may be implemented by hardware such as an application specific integrated circuit (ASIC) or a field-programmable gate array (FPGA).

The auxiliary storage device 130 holds the work determination table 204 and the work support table 205. The work determination table 204 holds weights and thresholds used for work change detection determination, weights and thresholds used for change coping determination, and weights and thresholds used for change recognition determination. The work support table 205 holds information regarding instructions to the worker 101 when a work change occurs.

In the present embodiment, a part or the entire of the information held by the auxiliary storage device 130 may be stored in the memory 120, a part or the entire of the information held by the memory 120 may be stored in the auxiliary storage device 130, or a part or the entire of the information held by the auxiliary storage device 130 or the memory 120 may be stored in another device connected to the management server 103.

In the present embodiment, the information used by the work support system may be expressed in any data structure without depending on the data structure. In the present embodiment, information is expressed in a table format, but a data structure appropriately selected from, for example, a list, a database, or a queue can store the information.

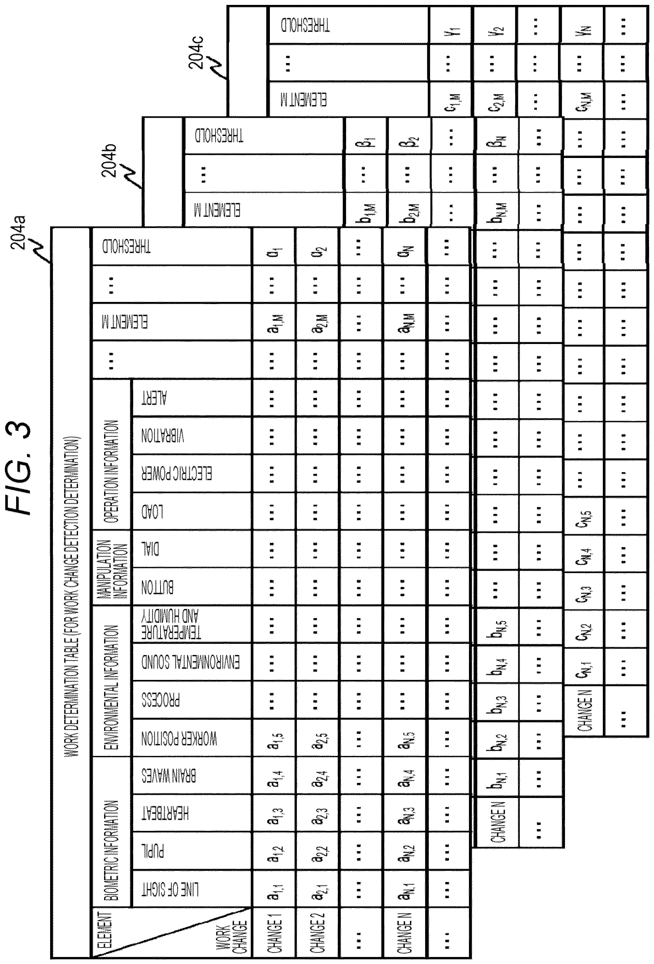

Fig. 3 is an example of the work determination table 204. In the example of Fig. 3, the work determination table 204 includes a work change detection determination table 204a, a change coping determination table 204b, and a change recognition determination table 204c. The work change detection determination table 204a, the change coping determination table 204b, and the change recognition determination table 204c indicate a work change detection determination algorithm, a change coping determination algorithm, and a change recognition determination algorithm, respectively.

The work change detection determination table 204a has, as a row label, a work change (specifically, abnormality occurrence, process switching, and the like) to be detected by the work change detection determination unit 211, such as a change 1, a change 2, ..., a change N, ... The work change detection determination table 204a has, as a column label, an element for performing work change detection determination such as a line of sight, a worker position, a button manipulation, a load, ..., an element M, ... (all of which are values that can be acquired by the information acquisition unit 201).

The column label of the work change detection determination table 204a further includes one label of a threshold for performing work change detection determination. Therefore, when the number of work changes is N and the number of elements is M, the work change detection determination table 204a is a table of an N × (M + 1) matrix because a threshold is further included in the column.

The cell of the column of a label other than the threshold of the work change detection determination table 204a stores the value of the weight (importance) of the element corresponding to the column of each work change. For example, the column of "line of sight" stores a weight value corresponding to a measurement value of "line of sight", and the column of "pupil" stores a weight value corresponding to a measurement value of "pupil". Each weight value may be a positive value, a negative value, or zero. The cell of the column of a label of the threshold of the work change detection determination table 204a stores a threshold corresponding to each work change.

For example, in the work change detection determination table 204a, the weight of each column corresponding to the change N is a_{N,1}, a_{N,2}, . . . , a_{N,M}, ..., and the threshold is α_{N}. The work change detection determination unit 211 determines that the change N has been detected as a work change when determining f_{N}^{α} (x₁, x₂, ..., x_{M}, ...): = a_{N,1}x₁ + a_{N,2}x₂ + ... + a_{N,M}x_{M} + ... > α_{N} is true (xₖ is a measurement value (value acquired by the information acquisition unit 201) of the item in the k-th column of the work change detection determination table 204a), and determines that the change N has not been detected as a work change when determining that the above-described inequality is not satisfied.

The change coping determination table 204b and the change recognition determination table 204c have row labels and column labels similar to those of the work change detection determination table 204a, for example. For example, in the change coping determination table 204b, the weight of each column corresponding to the change N is b_{N,1}, b_{N,2}, ..., b_{N,M}, ..., and the threshold is β_{N}. The change coping determination unit 212 determines that coping with the change N is appropriately performed when determining that f_{N}^{β} (x₁, x₂, ..., x_{M}, ...): = b_{N,1}x₁ + b_{N,2}x₂ + ... + b_{N,M}x_{M} + ... > β_{N} is true (xₖ is a measurement value (value acquired by the information acquisition unit 201) of the item in the k-th column of the change response determination table 204b), and determines that coping with the change N is not appropriately performed when determining that the above-described inequality is not satisfied.

For example, in the change recognition determination table 204c, the weight of each column corresponding to the change N is c_{N,1}, c_{N,2}, ..., c_{N,M}, ..., and the threshold is γ_{N}. The change recognition determination unit 214 determines that the worker 101 recognizes the change N when determining that f_{N}^{γ} (x₁, x₂, ..., x_{M}, ...): = c_{N,1}x₁ + c_{N,2}x₂ + ... + c_{N,M}x_{M} + ... > γ_{N} is true (xₖ is a measurement value (value acquired by the information acquisition unit 201) of the item in the k-th column of the change recognition determination table 204c), and determines that the worker 101 does not recognize the change N when determining that the above-described inequality is not satisfied.

In the above example, the determination is performed by a linear combination in which each measurement value is weighted, such as fᵢ^{α}, fᵢ^{β}, and fᵢ^{γ} (i is a natural number). However, the determination may be performed by a function or algorithm other than the linear combination. More specifically, for example, a determination based on a combination of two information amounts (i.e., product of two values) such as a line of sight and button manipulation, a determination on whether or not 1 is detected using information of 0 and 1 such as an alert, a determination based on a differential amount of time using an information amount varying with time, a determination based on a degree of deviation from a variation in a normal time using an information amount varying with a certain time period, and the like may be performed.

At least some of the measurement values and the weights may be described by a vector (i.e., values of a plurality of dimensions). In this case, for example, by executing a determination on whether or not the norms of fᵢ^{α} fᵢ^{β}, and fᵢ^{γ} exceed a threshold, it is only required to be determined as to whether or not a work change has been detected. Furthermore, at least some of the measurement values may be expressed as an information amount varying with time.

At least some of the measurement values substituted into fᵢ^{α} fᵢ^{β}, and fᵢ^{γ} may not be the raw data (i.e., measurement values themselves) acquired by the information acquisition unit 201, but may be, for example, the mean value in a predetermined period or a value such as an absolute value for which data processing has been performed. Each weight may be a value (or function) expressing the influence of the measurement value acquired by the information acquisition unit 201 on each determination.

As an example of an algorithm of work change detection determination in place of fᵢ^{α}, the work change detection determination unit 211 may record, in the memory 120 or the auxiliary storage device 130, the value of each element when determining that a work change has occurred, may calculate the similarity by comparing the value of each element (in particular, for example, a load, an alert, temperature and humidity, and the like) with the value of each element when determining that a work change has occurred in the past, and determine whether or not the work change has been detected based on the calculated similarity.

As an example of an algorithm of change coping determination in place of fᵢ^{β}, the change coping determination unit 212 may record, in the memory 120 or the auxiliary storage device 130, the value of each element when determining that the work change has been correctly coped with and when determining that the work change has not been correctly coped with, may calculate the similarity by comparing the value of each element (in particular, for example, button manipulation, dial manipulation, electric power, and the like) with the value of each element when determining that the work change has been correctly coped with in the past and when determining that the work change has not been correctly coped with, and determine whether or not the worker 101 has correctly coped with the work change based on the calculated similarity.

As an example of an algorithm of change recognition determination in place of fᵢ^{γ}, the change recognition determination unit 213 may compare the value of each element (in particular, for example, line of sight, button manipulation, operator position, and the like) before the work change with the value of each element after the work change, and determine whether or not the worker 101 recognizes the work change, based on the change (e.g., each element is represented by vector, and the magnitude of the norm of the difference between the vectors before and after the work change).

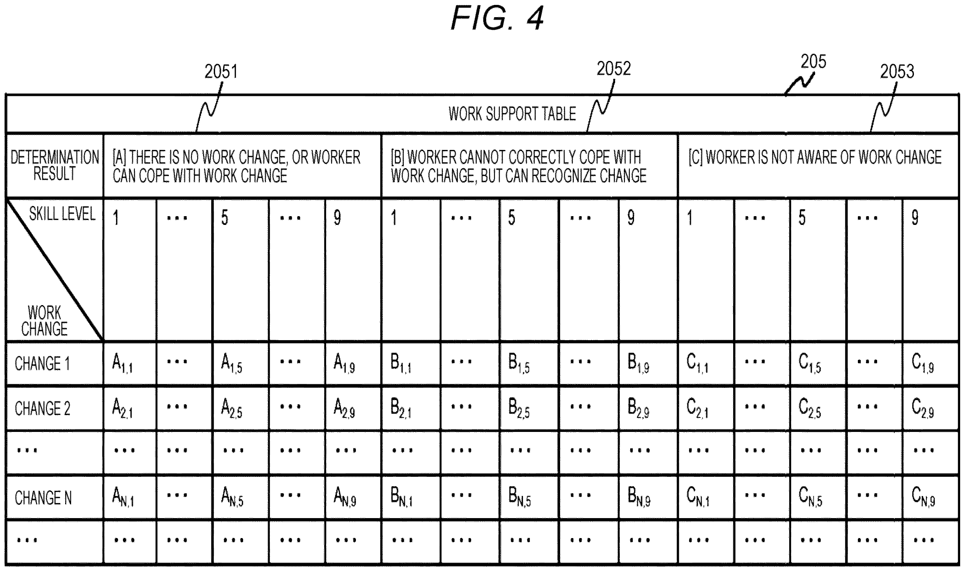

Fig. 4 is an example of the work support table 205. The work support table 205 has a column group 2051, a column group 2052, and a column group 2053. The column group 2051 is a column referred to when the analysis unit 404 determines that there is no work change or the worker 101 successfully cope with the work change (determination [A]). The column group 2052 is a column referred to when the analysis unit 404 determines that the worker 101 is not able to correctly cope with the work change but is able to recognize the change (determination [B]). The column group 2053 is a column referred to when the analysis unit 404 determines that the worker 101 is not aware of the work change (determination [C]).

The work support table 205 has a work change (specifically, it is desirable that the work change be the same as the work change included in the operation determination table 204) in the row label, such as the change 1, the change 2, ..., the change N, .... The column group 2051, the column group 2052, and the column group 2053 each have, in the column label, the skill level of the worker 101, such as skill levels 1, 2, ..., 9.

That is, when N work changes and M skill levels are defined, each column group of the work support table 205 is an N × M matrix. The cell of the work support table 205 holds a variable associated with information indicating work support contents.

In the work support table 205 of Fig. 4, for example, the variables held by the cells corresponding to the row of the change N in the column group 2051 of the determination [A] and the column of the skill level 1 are expressed as A_{N,1}. Similarly, for example, the variables held by the cells corresponding to the row of the change N in the column group 2052 of the determination [B] and the column of the skill level 1 are expressed as B_{N,1}, and the variables held by the cells corresponding to the row of the change N in the column group 2053 of the determination [C] and the column of the skill level 1 are expressed as C_{N,1}.

The support decision unit 203 decides support contents by acquiring variables of cells in the work support table 205 corresponding to the work change detection information, the change coping determination information, and/or the change recognition determination information received from the analysis unit 202 and the skill level information received from the skill level acquisition unit 210.

More specifically, for example, it is assumed that the support decision unit 203 receives, from the analysis unit 202, the determination [B] that the change N has occurred and the worker 101 has failed to correctly cope with the change N but has successfully recognized the change N, and receives, from the skill level acquisition unit 210, the skill level information indicating that the skill level of the worker 101 is 5. At this time, the support decision unit 203 acquires B_{N,5}, which is an instruction of how to cope with the change N, from the column group 2052 (column group corresponding to the determination [B]) of the work support table 205, and transmits it to the terminal 104.

Furthermore, for example, it is assumed that the support decision unit 203 receives, from the analysis unit 202, the determination [C] that the change N has occurred but the worker 101 has not been aware of the change N, and receives, from the skill level acquisition unit 210, the skill level information indicating that the skill level of the worker 101 is 1. At this time, the support decision unit 203 acquires C_{N,1}, which is an instruction (teaching) of the situation of the change N, from the column group 2053 (column group corresponding to the determination [C]) of the work support table 205, and transmits it to the terminal 104.

In the example of the work support table 205 of Fig. 4, skill levels of nine stages of 1, 2, ..., and 9 are defined, but any stage of 1 stage or more may be used. Furthermore, the skill level does not need to be defined in one dimension, and specifically, for example, it may be defined in a plurality of dimensions (e.g., two-dimensional skill level having the first skill level being 3 and the second skill level being 8 as elements) where each of a plurality of types of skill levels is an element. In this case, the labels of the columns included in each column group of the work support table 205 are only required to be expanded so as to cover the combinations of two types of skill levels such as the first skill level being 3 and the second skill level being 8, the first skill level being 3 and the second skill level being 9, the first skill level being 4 and the second skill level being 1, ....

In the example of Fig. 4, one skill level corresponds to one worker 101, but for example, a skill level may be defined for each work change for each worker 101. That is, the worker 101 and the skill level information 405 do not need to be in one-to-one correspondence, and specifically, for example, the skill level of the change N of a certain worker 101 may be defined as 5, and the skill level of the change (N + 1) may be defined as 9, ..., and so on.

The values of the work determination table 204 and the work support table 205 are set in advance before the work support system is introduced to the user. The values of the work determination table 204 and the work support table 205 may be appropriately updated and optimized based on information acquired by the information acquisition unit 201, feedback information from the system, and the like after the operation of the work support system is started.

Furthermore, not only the values of the work determination table 204 and the work support table 205 are updated, but also, for example, the format of the variables of the column labels (elements) of the work determination table 204 and the column labels (skill level information) of the work support table 205 may be changed from the one-dimensional format to the multi-dimensional (two-dimensional) format based on the information acquired by the information acquisition unit 201, the feedback information from the system, and the like after the operation of the work support system is started.

The determination functions fᵢ^{α}, fᵢ^{β}, and fᵢ^{γ} (i is a natural number) and the inequalities and thresholds for the determination may also be updated and optimized based on information acquired by the information acquisition unit 201, feedback information from the system, and the like after the operation of the work support system is started.

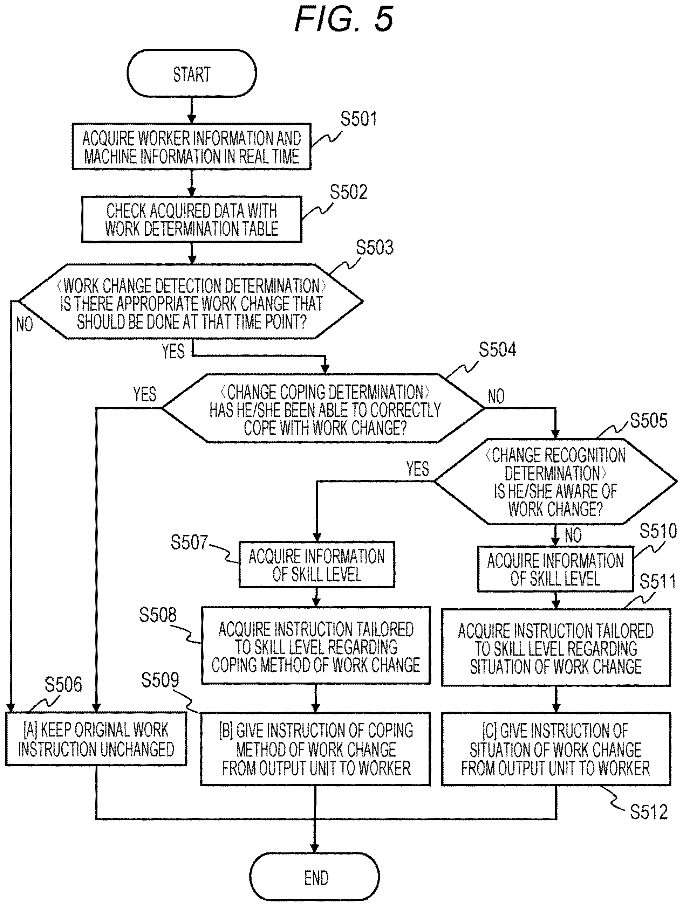

Fig. 5 is a flowchart example illustrating an example of the work support processing.

Step S501: The biometric information acquisition unit 206, the environmental information acquisition unit 207, the manipulation information acquisition unit 208, and the operation information acquisition unit 209 included in the information acquisition unit 201 acquire information in real time (e.g., every predetermined time period (e.g., 5 seconds) or each time the sensor 105 sends a value to the management server 103) from the sensors 105 provided in the worker 101 and the mechanical device 102. The information acquisition unit 201 synchronously transmits, to the analysis unit 202, the time indicated by the acquired information.

Step S502: The analysis unit 202 compares the information received from the functional unit included in the information acquisition unit 201 with the value of the work determination table 204.

Step S503: The work change detection determination unit 211 performs in real time the work change detection determination (appropriate detection determination of work change to perform at the time point due to an abnormality occurrence, process switching, or the like) by determining whether or not the above-described inequality fᵢ^{α} (x₁, x₂, ..., x_{M}, ...): = a_{i,1}x₁ + a_{i,2}x₂ + ... + a_{i,M}x_{M} + ... > αᵢ, into which the value received from the information acquisition unit 201 is substituted, is satisfied for each i (i is a natural number equal to or less than the number of records of the work change detection determination table 204a) with reference to the work change detection determination table 204a.

If the work change detection determination unit 211 determines that there is an inequality satisfied in step S503 (S503: YES), the processing proceeds to step S504. when determining that there is no inequality to be satisfied in step S503 (step S503: NO), the work change detection determination unit 211 transmits the determination result (information indicating that the determination [A] has been made) to the support decision unit 203, and the processing proceeds to step S506.

Step S504: The change coping determination unit 212 performs the change coping determination (determination as to whether or not the worker 101 has correctly coped with the generated work change) by determining whether or not the above-described inequality fᵢ^{β} (x₁, x₂, ..., x_{M}, ...): - bᵢ,₁x₁ + b_{i,2}x₂ + ... + b_{i,M}x_{M} + ... > βᵢ, into which the value received from the information acquisition unit 201 is substituted, is satisfied for each i (i is a natural number equal to or less than the number of records of the change coping determination table 204b, but may also be only for i corresponding to the work change detected in step S503) with reference to the change coping determination table 204b.

If there is an inequality that the change coping determination unit 212 determined to be satisfied in step S504 (S504: YES), the processing proceeds to step S506. when determining that there is no inequality to be satisfied in step S504 (S504: NO), the change coping determination unit 212 transmits the determination result to the support decision unit 203, and the processing proceeds to step S505.

Step S505: The change recognition determination unit 213 performs the change recognition determination (determination as to whether or not the worker 101 has been aware of the work change) by determining whether or not the above-described inequality f_{N}^{γ} (x₁, x₂, ..., x_{M}, ...): - c_{N,1}x₁ + c_{N,2}x₂ + ... + c_{N,M}x_{M} + ... > γ_{N}, into which the value received from the information acquisition unit 201 is substituted, is satisfied for each i (i is a natural number equal to or less than the number of records of the change recognition determination table 204c, but may also be only for i corresponding to the work change detected in step S503 or may also be only for i corresponding to the work change determined to have not been correctly coped in step S504) with reference to the change recognition determination table 204c.

If there is an inequality that the change recognition determination unit 213 determined to be satisfied in step S505 (S505: YES), the change recognition determination unit 213 transmits the determination result (information indicating the work change for which the determination [B] has been made) to the support decision unit 203, and the processing proceeds to step S507. When determining that there is no inequality to be satisfied in step S505 (S505: NO), the change recognition determination unit 213 transmits the determination result (information indicating the work change for which the determination [C] has been made) to the support decision unit 203, and the processing proceeds to step S510.

Step S506: If the determination [A] is made in step S503, the support decision unit 203 decides the support content of "not change the instruction", and transmits the processing result to the terminal 104 for display. Note that the support decision unit 203 may decide the support content of "not change the instruction" without reference to the value of the column group 2051 of the work support table 205. Furthermore, for example, in a case where all the values of A_{i,j} of the column group 2051 are set to "not change the instruction", the support decision unit 203 may acquire the work instruction from any cell in the column group 2051 of the work support table 205 (as in steps S508 and S511).

In a case where the value of A_{i,j} in the column group 2051 of the work support table 205 is determined in accordance with the work change and the skill level (i.e., at least some of the values of A_{i,j} in the column group 2051 are different), the support decision unit 203 may acquire the skill level information of the worker 101 as in steps S507 and S510, and may acquire the work instruction from the column group 2051 in accordance with the skill level information and the work change.

Step S507: If the determination [B] is made in step S505, the skill level acquisition unit 210 acquires the skill level information of the worker 101 performing work corresponding to the work change for which the determination [B] is made, and transmits the skill level information to the support decision unit 203. In a case where the skill level information is defined for each work change, the skill level acquisition unit 210 acquires the skill level information of the worker 101 performing the work corresponding to the work change for which the determination [B] is made.

Step S508: The support decision unit 203 acquires, from the column group 2052 (any value of B_{i,j}) of the work support table 205, a work instruction (instruction indicating how to cope with the work change) corresponding to the determination result received from the analysis unit 202 and the skill level information received from the skill level acquisition unit 210 in step S507.

Step S509: The support decision unit 203 transmits, to the terminal 104, the instruction (any value of B_{i,j}) indicating how to cope with the work change acquired in step S508, and displays the instruction on the terminal 104.

Step S510: If the determination [C] is made in step S505, the skill level acquisition unit 210 acquires the skill level information of the worker 101 performing work corresponding to the work change for which the determination [C] is made, and transmits the skill level information to the support decision unit 203. In a case where the skill level information is defined for each work change, the skill level acquisition unit 210 acquires the skill level information of the worker 101 performing the work corresponding to the work change for which the determination [C] is made.

Step S511: The support decision unit 203 acquires, from the column group 2053 (any value of C_{i,j}) of the work support table 205, a work instruction (instruction indicating the situation of work change) corresponding to the determination result received from the analysis unit 202 and the skill level information received from the skill level acquisition unit 210 in step S510.

Step S512: The support decision unit 203 transmits, to the terminal 104, the instruction (any value of C_{i,j}) indicating the situation of the work change acquired in step S511, and displays the instruction on the terminal 104.

Note that the processing may proceeds from the processing of step S502 to the processing of step S504 without executing the processing of step S503. If it is determined that a work change has occurred in step S503 without executing the processing of step S504, the processing may proceed to the processing of step S505. The processing may proceeds from the processing of step S502 to the processing of step S505 without executing the processing of step S503 and the processing of step S504. In a case where the processing of step S503 is not executed, the processing may proceed to the processing of step S504 or step S505 with, for example, input of the user of the management server 103, report of work change detection from another device connected to the management server 103, or the like as a trigger.

Note that it is desirable that information acquisition by the information acquisition unit 201 and the work change detection determination by the analysis unit 202 be executed in real time as indicated in steps S501 and S503. As for the performance conditions regarding the real time properties of the information acquisition unit 201 and the analysis unit 202, the acquisition frequency by the information acquisition unit 201 and the processing completion time by the analysis unit 202 are desirably set, specifically from the viewpoint of the performance necessary for the work support.

For example, since a human performs the high-order recognition processing in a fine time unit of equal to or less than 100 ms, performance conditions are preferably set in the information acquisition unit 201 such as acquisition of information of the line of sight at a frequency of equal to or greater than several tens of Hz. For example, the processing completion time from when the management server 103 acquires the information on the worker 101 and the mechanical device 102 to when the terminal 104 displays the support content is preferably set to be less than 1000 ms, for example, in accordance with 1 Hz, which is a typical frequency of human action. Needless to say, the method of setting the performance requirements is not limited to the above-described example.

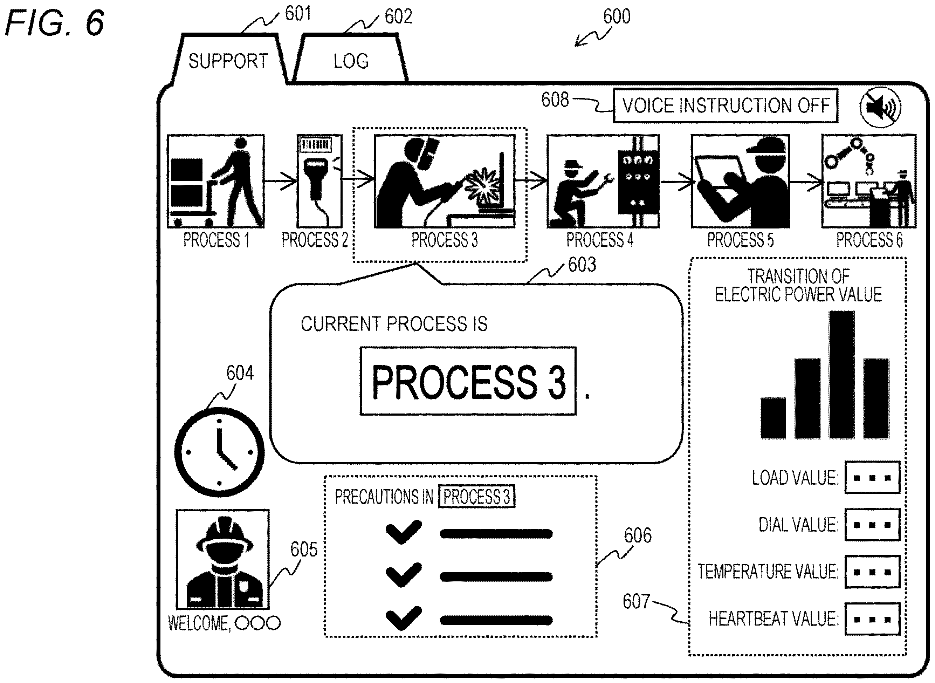

Fig. 6 is an example of the display screen of the terminal 104 displayed in step S506. That is, Fig. 6 is an example of the display screen displayed on the terminal 104 based on the processing result transmitted from the support decision unit 203 in step S506 in the case where the determination [A] is made in step S503 (it is determined that no work change has occurred or that the worker 101 can cope with the work change).

A display screen 600 includes a support tab 601 and a log tab 602. When the support tab 601 is selected, a work support content is displayed on the display screen 600. When the log tab 602 is selected, a log of work contents is displayed on the display screen 600. Fig. 6 illustrates a state in which the support tab 601 is selected.

In the example of Fig. 6, since no work change has occurred or the worker 101 has successfully coped with the work change, a work instruction in normal time is displayed on the display screen 600. Specifically, the display screen 600 includes, for example, a current process display region 603, a time display region 604, a worker information display region 605, a precaution display region 606, a numerical value display region 607, and a voice instruction presence/absence selection region 608.

The current process display region 603 displays information indicating the currently executed process of the work. Note that, as in the example of Fig. 6, the current process display region 603 may display not only the current process but also the entire process of the work. The current process displayed in the current process display region 603 is identified by detecting a work change in step S503. The information indicating the entire process may be set, for example, by the user of the management server 103 or the terminal 104 before the start of the first process.

The time display region 604 displays, for example, the current time and/or the elapsed time since the current process or the first process started. For example, by measuring the time from the time when the support decision unit 203 is notified of the detection of the work change from the analysis unit 202, the elapsed time from the start of the work change current process can be displayed on the terminal 104.

The worker information display region 605 displays information regarding the worker (e.g., the name of the worker, the skill level, and the like). The precaution display region 606 displays the precautions in the current process. For example, precautions for each process are stored in advance in the auxiliary storage device 130, and the support decision unit 203 acquires precautions corresponding to the current process from the auxiliary storage device 130 and displays them in the precaution display region 606.

The numerical value display region 607 displays numerical values of indices of attention in the current process such as, for example, electric power, load, dial, temperature, and heartbeat. The indices of attention are determined in advance, and the numerical value acquired by the information acquisition unit 201 is displayed in the numerical value display region 607 (e.g., in real time). By selecting the voice instruction presence/absence selection region 608, it is possible to switch whether or not to output, also by voice, the work instruction (support) displayed on the display screen 600. By outputting the work instruction (support) also by voice, it is possible to cause the worker 101 to recognize the work instruction more reliably. By not outputting the voice, it is possible to suppress excessive support to the worker 101 (e.g., not to disturb the concentration of the worker 101).

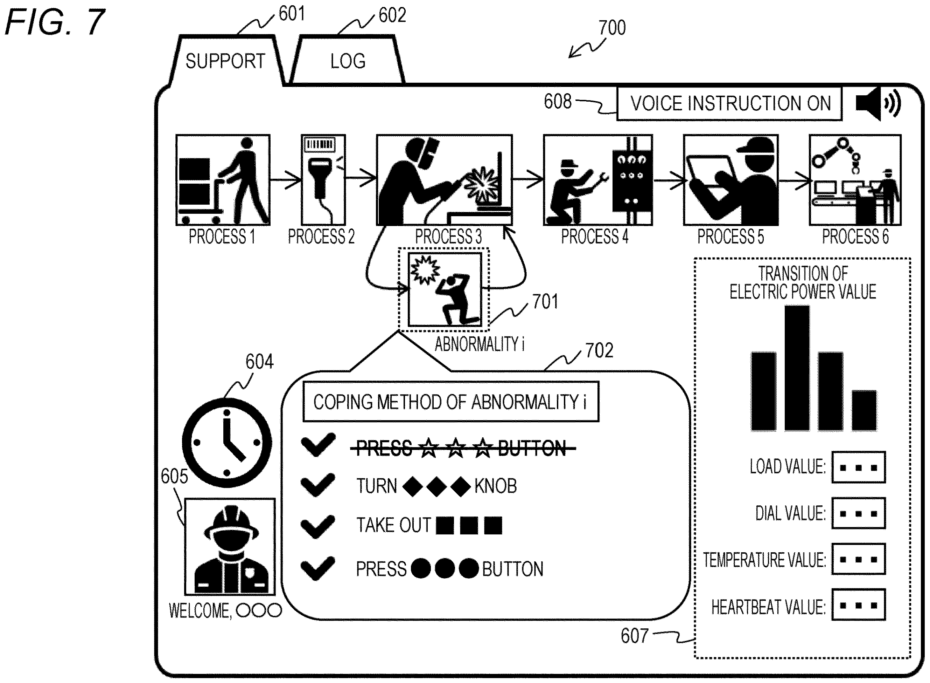

Fig. 7 is an example of the display screen of the terminal 104 displayed in step S509. That is, Fig. 7 is an example of the display screen displayed on the terminal 104 based on the processing result transmitted from the support decision unit 203 in step S509 in the case where the determination [B] is made in step S505 (it is determined that the worker 101 has not correctly coped with the work change but recognized the work change itself).

A difference between a display screen 700 of Fig. 7 and the display screen 600 of Fig. 6 will be described. In the example of Fig. 7, the worker 101 is aware that an abnormality (an example of work change) has occurred and does not know only how to cope, and hence the display screen 700 displays how to cope with the abnormality that has occurred.

The display screen 700 includes a work change display region 701 and an abnormality coping method display region 702 in place of the current process display region 603 and the precaution display region 606. The work change display region 701 displays the work to be coped currently (in the example of Fig. 7, it is a method of coping with the abnormality, and if a change in process occurs as a work change, the process after the change) in the entire process. That is, information indicating the work change identified in step S503 is displayed in the work change display region 701.

The abnormality coping method display region 702 displays a coping method for the currently occurring abnormality. For example, information indicating a method of coping with each abnormality included in the work change is stored in advance in the auxiliary storage device 130, and the support decision unit 203 acquires, from the auxiliary storage device 130, information indicating the method of coping with the abnormality identified in step S503, and displays the information in the abnormality coping method display region 702.

When all the coping methods displayed in the abnormality coping method display region 702 are executed, it becomes a state (normal state) of the determination [A] (where it is determined that no work change has occurred or that the worker 101 has successfully coped with the work change), and it is preferable to return to the display screen 600 of Fig. 6.

When a process change occurs as a work change, the abnormality coping method display region 702 is only required to display the process after the change similar to that in the precaution display region 606, or to display detailed work of the process after the change. When the display screen 700 is displayed, the worker 101 has not correctly coped with the work change and the abnormal state continues or the processing cannot proceed to the next process unless the correct coping is carried out. Hence, the worker 101 may be caused to surely recognize the work instruction (support) also using the voice instruction regardless of the selection content in the voice instruction presence/absence selection region 608 (or the voice instruction presence/absence selection region 608 is not displayed).

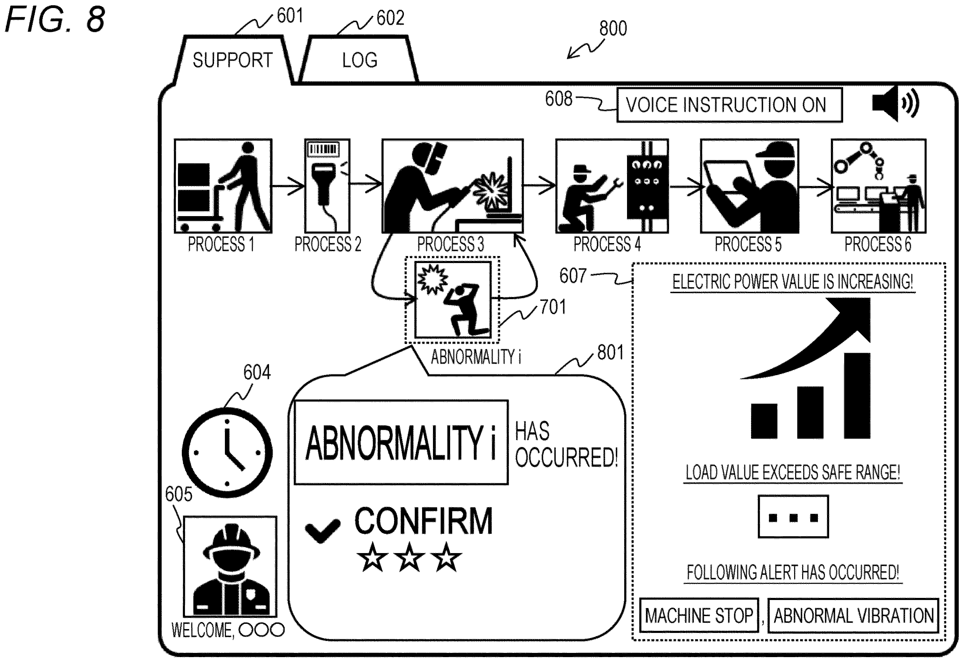

Fig. 8 is an example of the display screen of the terminal 104 displayed in step S512. That is, Fig. 8 is an example of the display screen displayed on the terminal 104 based on the processing result transmitted from the support decision unit 203 in step S512 in the case where the determination [C] is made in step S505 (it is determined that the worker 101 has not correctly coped with the work change and does not even recognize the work change itself).

In the example of Fig. 8 for explaining the difference between a display screen 800 of Fig. 8 and the display screen 700 of Fig. 7, the worker 101 is in a state of not only unable to cope with the abnormality but also even unaware of the occurrence of the abnormality. Since it is necessary to first make the worker 101 recognize the situation where the abnormality has occurred, the display screen 800 displays the situation of the abnormality having occurred.

The display screen 800 includes an abnormality occurrence notification display region 801 in place of the abnormality coping method display region 702. The abnormality occurrence notification display region 801 displays information indicating the occurred abnormality (work change) and an action for the worker 101 to perform first for the occurred abnormality. In the example of Fig. 8, it is preferable that the numerical value display region 607 displays not only the sensor value but also the increase/decrease of the value for explaining the situation of the abnormality and the contents of the occurrence of the alert (machine stop, abnormal vibration, and the like).

The numerical value display region 607 displays the increase/decrease of a value for explaining the situation of the abnormality and the contents of the occurrence of the alert, whereby the worker 101 can learn the determination method of the abnormality occurrence, and it is consequently possible to facilitate growth of the worker 101.

When the worker 101 executes the action to perform first, which is displayed in the abnormality occurrence notification display region 801, it becomes the state of the determination [B] (it is determined that the worker 101 has not correctly coped with the work change but recognized the work change itself), and it is preferable to return to the display screen 700 of Fig. 7.

When the display screen 800 is displayed, the worker 101 has not even recognized the abnormality not to mention that he has failed to correctly cope with the work change, and unless the worker 101 becomes aware of the abnormality and correctly cope with it, the abnormal state continues or the processing cannot proceed to the next process. Hence, the worker 101 may be made to surely recognize the work instruction (support) also using the voice instruction regardless of the selection content in the voice instruction presence/absence selection region 608 (or the voice instruction presence/absence selection region 608 is not displayed) .

In Figs. 6 to 8, examples of a display screen in the case where an abnormality occurs as a work change have been described. The work support system is a system coping with a change in an appropriate work to perform at that time point due to not only an abnormality occurrence but also a change in process, and hence the same display can be performed at the time of change in process.

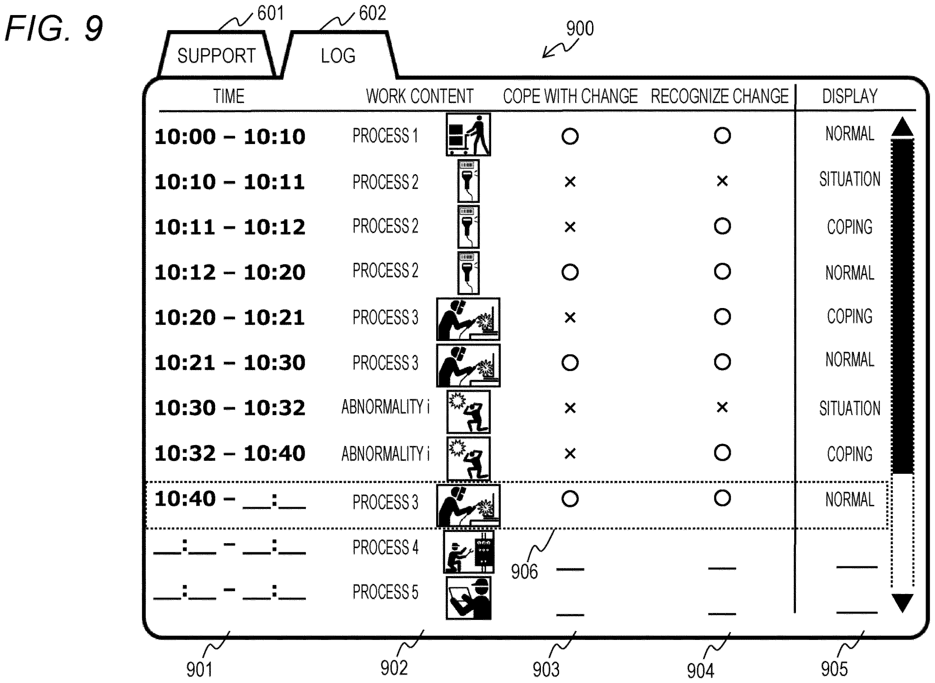

Fig. 9 is an example of a work support log display screen. When the log tab 602 is selected, a work support log display screen 900 is displayed. The work support log display screen 900 displays the work history of the worker 101 and support contents by the management server 103.

Specifically, for example, the work support log display screen 900 displays the time series of the processes having been executed, being executed, and scheduled to be executed by the worker 101, and the occurrence of abnormality. Specifically, for example, the work support log display screen 900 includes a time field 901, a work content field 902, a change coping correct/error field 903, a change recognition presence/absence field 904, a support content field 905, and a current process suggestion region 906.

The time field 901 displays the time at which each work content has been executed, is being executed, and is scheduled to be executed. The work content field 902 displays the work content (process, occurrence of abnormal state, and return to normal state). The change coping correct/error field 903 displays the result of the change coping determination in step S504. The change recognition presence/absence field 904 displays the result of the change recognition determination in step S505.

The support content field 905 displays information indicating which work support is displayed. The support content field 905 displays, for example, "normal" indicating that a work instruction in normal time (display screen 600 in Fig. 6) has been output, "coping" indicating that an instruction for coping with a work change (display screen 700 in Fig. 7) has been output, or "situation" indicating that an instruction of the situation of the work change (display screen 800 in Fig. 8) has been output. The current process suggestion region 906 indicates the process currently being executed or the abnormality currently occurring.

When a work change is detected in step S503 (when a process has changed, when an abnormality has occurred, or at the time of shift from an abnormal state to a normal state), when the determination result in step S504 is changed from the determination result in the most recent step S504, or when the determination result in step S505 is changed from the determination result in the most recent step S505, the support decision unit 203 updates (adds a row) the log for display on the work support log display screen 900.

The work support log display screen 900 in Fig. 9 indicates that the worker 101 started the work at 10 o'clock, that the worker 101 was not aware that the process was switched to the process 2 at 10:10, that the worker 101 was aware that the process was switched to the process 3 at 10:20 but did not know how to cope with the process 3, that the worker 101 was not aware that the abnormality i occurred in the middle of the process 3 at 10:30, and that the worker 101 has finished the coping with the abnormality i and is in the middle of the process 3 at present, and the like.

Thus, the management server 103 of the present embodiment can acquire information on the worker 101 and the mechanical device 102, and decide the support content that provide the worker 101 with insight when detecting a change in the appropriate work to perform at that time point. Furthermore, the management server 103 of the present embodiment can determine whether the worker 101 is aware of the change of the appropriate work to perform at that time point and whether to have been able to correctly cope with it, and can decide the support content in accordance with the determination result.

The management server 103 of the present embodiment can prevent the worker 101 from dropping in terms of the work efficiency and from losing his motivation by reducing unnecessary support (displaying such as the display screen 600) when the worker 101 is aware of the work change or when appropriately coping. When the worker 101 has failed to correctly cope with the work change or is not aware of the work change, necessary support is provided (display such as the display screen 700 or the display screen 800), and hence the safety of the work can be secured.

Therefore, unlike the conventional support system providing excessive or insufficient support, the work support system of the present embodiment can provide education in accordance with the work situation in real time for the unskilled worker 101, and hence it is possible to solve the problem in a case of making the unskilled worker grow without taking the time of the skilled worker, which is a problem the production work site is facing.

Furthermore, each of the above-described configurations, functions, processing units, processing means, and the like may be achieved by hardware by designing some or all of them by, for example, an integrated circuit, or may be achieved by software by a processor interpreting and executing a program implementing each of the functions.

Information such as programs, tables, and files that implement each function can be stored in a storage device such as a memory, a hard disk, and a solid state drive (SSD), or a recording medium such as an integrated circuit (IC) card, an SD card, and a digital versatile disc (DVD) .

Furthermore, the control lines and information lines indicated are those considered to be essential for explanation, and not necessarily all the control lines and information lines essential for implementation are indicated. In practice, almost all configurations may be considered to be interconnected.

## Claims

1. A work support apparatus for making an unskilled worker grow into a skilled worker without disturbing the skilled workers' work, comprising:
a processor and a memory (120), and
an output device (160) to which the work support apparatus is connected,
the memory (120) holds a value indicating information on at least one of an apparatus used for a work and a worker performing the work (101),
work change recognition determination information indicating a work change recognition determination algorithm, and
work support information indicating a work support content corresponding to a determination result, and
the processor applies a value indicating information on at least one of the apparatus and the worker (101) to the work change recognition determination algorithm and execute a work change recognition determination for determining whether or not the worker (101) recognizes a work change indicating at least one of a change in a work process and a transition between a normal state and an abnormal state of a work, and
outputs, to the output device (160), a work support content corresponding to a determination result of the work change recognition determination, with reference to the work support information.

2. The work support apparatus according to claim 1, wherein
the memory (120) holds work change detection determination information indicating a work change detection determination algorithm,
the processor applies the value indicating information of at least one of the apparatus and the worker (101) to the work change detection determination algorithm, and executes work change detection determination for determining whether or not the work change has occurred, and
a condition for executing the work change recognition determination includes determining that the work change has occurred at least in the work change detection determination.

3. The work support apparatus according to claim 2, wherein
when the processor determines that the work change has not occurred in the work change detection determination, the processor does not execute the work change recognition determination and does not change the work support content having been output to the output device (160) .

4. The work support apparatus according to claim 2, wherein
the processor stores, in the memory (120), a value indicating information on at least one of the apparatus and the worker (101) when determining that the work change has occurred, and
determines whether or not the work change has occurred based on a comparison result between the value indicating information on at least one of the apparatus and the worker (101) to be subjected to the work change detection determination and a value indicating information on at least one of the apparatus and the worker (101) when determining that the work change has occurred in a past stored in the memory (120).

5. The work support apparatus according to claim 2, wherein
the processor determines whether or not the worker (101) recognizes the work change based on a comparison result of values indicating information on at least one of the apparatus and the worker (101) before and after determining that the work change has occurred.

6. The work support apparatus according to claim 2, wherein
the memory (120) holds work change coping determination information indicating a work change coping determination algorithm, and
the processor applies a value indicating information on at least one of the apparatus and the worker (101) to the work change coping determination algorithm, and executes work change recognition determination for determining whether or not the worker (101) has been capable of coping with the work change, and
executes the work change recognition determination when determining that the work change has occurred in the work change detection determination and when determining that the worker (101) has not been capable of coping with the work change in the work change recognition determination.

7. The work support apparatus according to claim 6, wherein
when the processor determines that the work change has occurred in the work change detection determination and determines that the worker (101) has been capable of coping with the work change in the work change recognition determination, the processor does not execute the work change recognition determination and does not change a work support content having been output to the output device (160) .

8. The work support apparatus according to claim 6, wherein
the work support content in the work support information includes information indicating a coping method for the work change and information indicating a situation of the work change, and
the processor outputs, to the output device (160), information indicating a coping method for the work change when the processor determines that the worker (101) recognizes the work change in the work change recognition determination, and
outputs, to the output device (160), information indicating a situation of the work change when the processor determines that the worker (101) does not recognize the work change in the work change recognition determination.

9. The work support apparatus according to claim 6, wherein
the processor stores, in the memory (120), a value indicating information on at least one of the apparatus and the worker (101) when the processor determines that the worker (101) has been capable of coping with the work change and when the processor determines that the worker (101) has not been capable of coping with the work change, and
determines whether or not the worker (101) has been capable of coping with the work change based on a comparison result between a value indicating information on at least one of the apparatus and the worker (101) to be subjected to the work change recognition determination and a value, stored in the memory, indicating information on at least one of the apparatus and the worker (101) when determining that the worker (101) has been capable of coping with the work change and when determining that the worker (101) has not been capable of coping with the work change.

10. The work support apparatus according to claim 1, wherein
the memory (120) holds skill level information indicating a skill level of the worker (101),
the work support content in the work support information is associated with a combination of the determination result and the skill level, and
the processor acquires the skill level of the worker (101) from the skill level information, and
outputs, to the output device (160), the work support content corresponding to a combination of the acquired skill level and the determination result of the work change recognition determination, with reference to the work support information.

11. The work support apparatus according to claim 1, wherein
a value indicating information on at least one of the apparatus and the worker (101) includes at least one of a value indicating biometric information on the worker (101), a value indicating environmental information where the worker (101) and the apparatus are arranged, a value indicating manipulation information on the apparatus, and a value indicating operation information on the apparatus.

12. The work support apparatus according to claim 11, wherein the
biometric information of the worker (101) includes at least one of the worker's line of sight, pupil, heartbeat, and brain waves,
the environmental information includes at least one of a position of the worker (101), a process being performed by the worker (101), environmental sound at a position where the worker (101) or the apparatus is arranged, and temperature and humidity at a position where the worker (101) or the apparatus is arranged,
the manipulation information includes at least one of button manipulation information and dial manipulation information, and
the operation information includes at least one of a load to the apparatus, electric power of the apparatus, vibration of the apparatus, and an alert output by the apparatus.

13. The work support apparatus according to claim 1, wherein
the processor acquires and updates information on at least one of the apparatus and the worker (101) based on a performance of an acquisition frequency of information on at least one of the apparatus and the worker (101), and processing time from when the processor acquires information on at least one of the apparatus and the worker (101) to when the processor becomes possible to output, to the output device, a work support content corresponding to a determination result of the work change recognition determination.

14. The work support apparatus according to claim 1, wherein
the processor outputs, to the output device (160), output history of a work support content having been output to the output device (160).

15. A work support method by a work support apparatus for making an unskilled worker grow into a skilled worker without disturbing the skilled workers' work, wherein
the work support apparatus includes
a processor and a memory (120), and is connected to an output device (160),
the memory holds a value indicating information on at least one of an apparatus used for a work and a worker performing the work (101),
work change recognition determination information indicating a work change recognition determination algorithm, and
work support information indicating a work support content corresponding to a determination result,
the work support method **characterized by**
applying, by the processor, a value indicating information on at least one of the apparatus and the worker (101) to the work change recognition determination algorithm and executing a work change recognition determination for determining whether or not the worker (101) recognizes a work change indicating at least one of a change in a work process and a transition between a normal state and an abnormal state of a work, and
outputting, by the processor, to the output device (160), a work support content corresponding to a determination result of the work change recognition determination, with reference to the work support information.

## Patentansprüche

1. Arbeitsunterstützungsvorrichtung, um zu bewirken, dass ein nicht qualifizierter Arbeiter zu einem qualifizierten Arbeiter heranwächst, ohne die Arbeit des qualifizierten Arbeiters zu stören, umfassend:
einen Prozessor und einen Speicher (120), und
eine Ausgabevorrichtung (160), mit der die Arbeitsunterstützungsvorrichtung verbunden ist,
der Speicher (120) einen Wert hält, der Informationen über mindestens eines von einer Vorrichtung, die für eine Arbeit verwendet wird, und einem Arbeiter, der die Arbeit (101) ausführt, angibt,
Arbeitsänderungserkennungs-Bestimmungsinformationen, die einen Arbeitsänderungserkennungs-Bestimmungsalgorithmus angeben, und
Arbeitsunterstützungsinformationen, die einen Arbeitsunterstützungsinhalt angeben, der einem Bestimmungsergebnis entspricht, und
der Prozessor einen Wert, der Informationen über mindestens eines von der Vorrichtung und dem Arbeiter (101) angibt, auf den Arbeitsänderungserkennungs-Bestimmungsalgorithmus anwendet und eine Arbeitsänderungserkennungs-Bestimmung ausführt, um zu bestimmen, ob der Arbeiter (101) eine Arbeitsänderung erkennt oder nicht, die mindestens eines von einer Änderung in einem Arbeitsprozess und einem Übergang zwischen einem normalen Zustand und einem anormalen Zustand einer Arbeit angibt, und
einen Arbeitsunterstützungsinhalt, der einem Bestimmungsergebnis der Arbeitsänderungserkennungs-Bestimmung entspricht, unter Bezugnahme auf die Arbeitsunterstützungsinformationen an die Ausgabevorrichtung (160) ausgibt.

2. Arbeitsunterstützungsvorrichtung nach Anspruch 1, wobei
der Speicher (120) Arbeitsänderungserkennungs-Bestimmungsinformationen hält, die einen Arbeitsänderungserkennungs-Bestimmungsalgorithmus angeben,
der Prozessor den Wert, der Informationen von mindestens einem von der Vorrichtung und dem Arbeiter (101) angibt, auf den Arbeitsänderungserkennungs-Bestimmungsalgorithmus anwendet und eine Arbeitsänderungserkennungs-Bestimmung ausführt, um zu bestimmen, ob die Arbeitsänderung aufgetreten ist oder nicht, und
eine Bedingung zum Ausführen der Arbeitsänderungserkennungs-Bestimmung das Bestimmen umfasst, dass die Arbeitsänderung mindestens in der Arbeitsänderungserkennungs-Bestimmung aufgetreten ist.

3. Arbeitsunterstützungsvorrichtung nach Anspruch 2, wobei
wenn der Prozessor bestimmt, dass die Arbeitsänderung in der Arbeitsänderungserkennungs-Bestimmung nicht aufgetreten ist, der Prozessor die Arbeitsänderungserkennungs-Bestimmung nicht ausführt und nicht ändert
wobei der Arbeitsunterstützungsinhalt an die Ausgabevorrichtung (160) ausgegeben wurde.

4. Arbeitsunterstützungsvorrichtung nach Anspruch 2, wobei
der Prozessor in dem Speicher (120) einen Wert speichert, der Informationen über mindestens eines von der Vorrichtung und dem Arbeiter (101) angibt, wenn bestimmt wird, dass die Arbeitsänderung aufgetreten ist, und
bestimmt, ob die Arbeitsänderung aufgetreten ist oder nicht, basierend auf einem Vergleichsergebnis zwischen dem Wert, der Informationen über mindestens eines von der Vorrichtung und dem Arbeiter (101) angibt, die der Arbeitsänderungserkennungs-Bestimmung unterzogen werden sollen, und einem Wert, der Informationen über mindestens eines von der Vorrichtung und dem Arbeiter (101) angibt, wenn bestimmt wird, dass die Arbeitsänderung in einer Vergangenheit aufgetreten ist, die in dem Speicher (120) gespeichert ist.

5. Arbeitsunterstützungsvorrichtung nach Anspruch 2, wobei
der Prozessor bestimmt, ob der Arbeiter (101) die Arbeitsänderung erkennt oder nicht, basierend auf einem Vergleichsergebnis von Werten, die Informationen über mindestens eines von der Vorrichtung und dem Arbeiter (101) angeben, vor und nach dem Bestimmen, dass die Arbeitsänderung aufgetreten ist.

6. Arbeitsunterstützungsvorrichtung nach Anspruch 2, wobei
der Speicher (120) Arbeitsänderungsbewältigungs-Bestimmungsinformationen hält, die einen Arbeitsänderungsbewältigungs-Bestimmungsalgorithmus angeben, und
der Prozessor einen Wert, der Informationen über mindestens eines von der Vorrichtung und dem Arbeiter (101) angibt, auf den Arbeitsänderungsbewältigungs-Bestimmungsalgorithmus anwendet und eine Arbeitsänderungserkennungs-Bestimmung ausführt, um zu bestimmen, ob der Arbeiter (101) in der Lage war, die Arbeitsänderung zu bewältigen oder nicht, und
die Arbeitsänderungserkennungs-Bestimmung ausführt, wenn bestimmt wird, dass die Arbeitsänderung in der Arbeitsänderungserkennungs-Bestimmung aufgetreten ist, und wenn bestimmt wird, dass der Arbeiter (101) nicht in der Lage war, die Arbeitsänderung in der Arbeitsänderungserkennungs-Bestimmung zu bewältigen.

7. Arbeitsunterstützungsvorrichtung nach Anspruch 6, wobei
wenn der Prozessor bestimmt, dass die Arbeitsänderung in der Arbeitsänderungserkennungs-Bestimmung aufgetreten ist, und bestimmt, dass der Arbeiter (101) in der Lage war, die Arbeitsänderung in der Arbeitsänderungserkennungs-Bestimmung zu bewältigen, der Prozessor die Arbeitsänderungserkennungs-Bestimmung nicht ausführt und einen Arbeitsunterstützungsinhalt, der an die Ausgabevorrichtung (160) ausgegeben wurde, nicht ändert.

8. Arbeitsunterstützungsvorrichtung nach Anspruch 6, wobei
der Arbeitsunterstützungsinhalt in den Arbeitsunterstützungsinformationen Informationen, die ein Bewältigungsverfahren für die Arbeitsänderung angeben, und Informationen, die eine Situation der Arbeitsänderung angeben, umfasst, und
der Prozessor Informationen, die ein Bewältigungsverfahren für die Arbeitsänderung angeben, an die Ausgabevorrichtung (160) ausgibt, wenn der Prozessor bestimmt, dass der Arbeiter (101) die Arbeitsänderung in der Arbeitsänderungserkennungs-Bestimmung erkennt, und
Informationen, die eine Situation der Arbeitsänderung angeben, an die Ausgabevorrichtung (160) ausgibt, wenn der Prozessor bestimmt, dass der Arbeiter (101) die Arbeitsänderung in der Arbeitsänderungserkennungs-Bestimmung nicht erkennt.

9. Arbeitsunterstützungsvorrichtung nach Anspruch 6, wobei
der Prozessor in dem Speicher (120) einen Wert speichert, der Informationen über mindestens eines von der Vorrichtung und dem Arbeiter (101) angibt, wenn der Prozessor bestimmt, dass der Arbeiter (101) in der Lage war, die Arbeitsänderung zu bewältigen, und wenn der Prozessor bestimmt, dass der Arbeiter (101) nicht in der Lage war, die Arbeitsänderung zu bewältigen, und
bestimmt, ob der Arbeiter (101) in der Lage war, die Arbeitsänderung zu bewältigen, basierend auf einem Vergleichsergebnis zwischen einem Wert, der Informationen über mindestens eines von der Vorrichtung und dem Arbeiter (101) angibt, die der Arbeitsänderungserkennungs-Bestimmung unterzogen werden sollen, und einem Wert, der in dem Speicher gespeichert ist, der Informationen über mindestens eines von der Vorrichtung und dem Arbeiter (101) angibt, wenn bestimmt wird, dass der Arbeiter (101) in der Lage war, die Arbeitsänderung zu bewältigen, und wenn bestimmt wird, dass der Arbeiter (101) nicht in der Lage war, die Arbeitsänderung zu bewältigen.

10. Arbeitsunterstützungsvorrichtung nach Anspruch 1, wobei
der Speicher (120) Fertigkeitsniveauinformationen hält, die ein Fertigkeitsniveau des Arbeiters (101) angeben,
der Arbeitsunterstützungsinhalt in den Arbeitsunterstützungsinformationen einer Kombination des Bestimmungsergebnisses und des Fertigkeitsniveaus zugeordnet ist, und
der Prozessor das Fertigkeitsniveau des Arbeiters (101) aus den Fertigkeitsniveauinformationen erfasst, und
den Arbeitsunterstützungsinhalt, der einer Kombination des erfassten Fertigkeitsniveaus und des Bestimmungsergebnisses der Arbeitsänderungserkennungs-Bestimmung entspricht, unter Bezugnahme auf die Arbeitsunterstützungsinformationen an die Ausgabevorrichtung (160) ausgibt.

11. Arbeitsunterstützungsvorrichtung nach Anspruch 1, wobei
ein Wert, der Informationen über die Vorrichtung und/oder den Arbeiter (101) angibt, einen Wert, der biometrische Informationen über den Arbeiter (101) angibt, und/oder einen Wert, der Umgebungsinformationen angibt, wo der Arbeiter (101) und die Vorrichtung angeordnet sind, und/oder einen Wert, der Manipulationsinformationen über die Vorrichtung angibt, und/oder einen Wert, der Betriebsinformationen über die Vorrichtung angibt, umfasst.

12. Arbeitsunterstützungsvorrichtung nach Anspruch 11, wobei
biometrische Informationen des Arbeiters (101) die Sichtlinie des Arbeiters und/oder die Pupille und/oder den Herzschlag und/oder Gehirnwellen umfassen,
die Umgebungsinformationen eine Position des Arbeiters (101) und/oder einen Prozess, der durch den Arbeiter (101) ausgeführt wird, und/oder Umgebungsgeräusche an einer Position, wo der Arbeiter (101) oder die Vorrichtung angeordnet ist, und/oder Temperatur und Feuchtigkeit an einer Position, wo der Arbeiter (101) oder die Vorrichtung angeordnet ist, umfassen,
die Manipulationsinformationen Tasten-Manipulationsinformationen und/oder Wähl-Manipulationsinformationen umfassen, und
die Betriebsinformationen eine Last auf die Vorrichtung und/oder elektrische Leistung der Vorrichtung und/oder Vibration der Vorrichtung und/oder eine Warnung, die durch die Vorrichtung ausgegeben wird, umfassen.

13. Arbeitsunterstützungsvorrichtung nach Anspruch 1, wobei
der Prozessor Informationen über mindestens eines von der Vorrichtung und dem Arbeiter (101) basierend auf einer Leistung einer Erfassungsfrequenz von Informationen über mindestens eines von der Vorrichtung und dem Arbeiter (101) und einer Verarbeitungszeit ab dem Zeitpunkt, zu dem der Prozessor Informationen über mindestens eines von der Vorrichtung und dem Arbeiter (101) erfasst, bis zu dem Zeitpunkt, zu dem es dem Prozessor möglich wird, einen Arbeitsunterstützungsinhalt, der einem Bestimmungsergebnis der Arbeitsänderungserkennungs-Bestimmung entspricht, an die Ausgabevorrichtung ausgibt, erfasst und aktualisiert.

14. Arbeitsunterstützungsvorrichtung nach Anspruch 1, wobei
der Prozessor einen Ausgabeverlauf eines Arbeitsunterstützungsinhalts, der an die Ausgabevorrichtung (160) ausgegeben wurde, an die Ausgabevorrichtung (160) ausgibt.

15. Arbeitsunterstützungsverfahren durch eine Arbeitsunterstützungsvorrichtung, um zu bewirken, dass ein nicht qualifizierter Arbeiter zu einem qualifizierten Arbeiter heranwächst, ohne die Arbeit des qualifizierten Arbeiters zu stören, wobei
die Arbeitsunterstützungsvorrichtung umfasst
einen Prozessor und einen Speicher (120), und mit einer Ausgabevorrichtung (160) verbunden ist,
der Speicher einen Wert hält, der Informationen über mindestens eines von einer Vorrichtung, die für eine Arbeit verwendet wird, und einem Arbeiter, der die Arbeit (101) ausführt, angibt,
Arbeitsänderungserkennungs-Bestimmungsinformationen, die einen Arbeitsänderungserkennungs-Bestimmungsalgorithmus angeben, und
Arbeitsunterstützungsinformationen, die einen Arbeitsunterstützungsinhalt angeben, der einem Bestimmungsergebnis entspricht,
wobei das Arbeitsunterstützungsverfahren **gekennzeichnet ist durch**
Anwenden, durch den Prozessor, eines Werts, der Informationen über mindestens eines von der Vorrichtung und dem Arbeiter (101) angibt, auf den Arbeitsänderungserkennungs-Bestimmungsalgorithmus und Ausführen einer Arbeitsänderungserkennungs-Bestimmung, um zu bestimmen, ob der Arbeiter (101) eine Arbeitsänderung erkennt oder nicht, die mindestens eines von einer Änderung in einem Arbeitsprozess und einem Übergang zwischen einem normalen Zustand und einem anormalen Zustand einer Arbeit angibt, und
Ausgeben, durch den Prozessor, eines Arbeitsunterstützungsinhalts, der einem Bestimmungsergebnis der Arbeitsänderungserkennungs-Bestimmung entspricht, unter Bezugnahme auf die Arbeitsunterstützungsinformationen an die Ausgabevorrichtung (160).

## Revendications

1. Appareil de support de travail pour faire grandir un travailleur non qualifié en un travailleur qualifié sans perturber le travail du travailleur qualifié, comprenant :
un processeur et une mémoire (120), et
un dispositif de sortie (160) auquel l'appareil de support de travail est connecté,
la mémoire (120) contient une valeur indiquant des informations sur au moins l'un d'un appareil utilisé pour un travail et d'un travailleur effectuant le travail (101),
des informations de détermination de reconnaissance de changement de travail indiquant un algorithme de détermination de reconnaissance de changement de travail, et
des informations de support de travail indiquant un contenu de support de travail correspondant à un résultat de détermination, et
le processeur applique une valeur indiquant des informations sur au moins l'un de l'appareil et du travailleur (101) à l'algorithme de détermination de reconnaissance de changement de travail et exécute une détermination de reconnaissance de changement de travail pour déterminer si le travailleur (101) reconnaît ou non un changement de travail indiquant au moins l'un d'un changement dans un processus de travail et d'une transition entre un état normal et un état anormal d'un travail, et
délivre, au dispositif de sortie (160), un contenu de support de travail correspondant à un résultat de détermination de la détermination de reconnaissance de changement de travail, en référence aux informations de support de travail.

2. Appareil de support de travail selon la revendication 1, dans lequel
la mémoire (120) contient des informations de détermination de détection de changement de travail indiquant un algorithme de détermination de détection de changement de travail,
le processeur applique la valeur indiquant des informations d'au moins l'un de l'appareil et du travailleur (101) à l'algorithme de détermination de détection de changement de travail, et exécute une détermination de détection de changement de travail pour déterminer si le changement de travail s'est produit ou non, et
une condition pour exécuter la détermination de reconnaissance de changement de travail inclut la détermination que le changement de travail s'est produit au moins dans la détermination de détection de changement de travail.

3. Appareil de support de travail selon la revendication 2, dans lequel
lorsque le processeur détermine que le changement de travail ne s'est pas produit dans la détermination de détection de changement de travail, le processeur n'exécute pas la détermination de reconnaissance de changement de travail et ne change pas
le contenu de support de travail ayant été délivré au dispositif de sortie (160).

4. Appareil de support de travail selon la revendication 2, dans lequel
le processeur stocke, dans la mémoire (120), une valeur indiquant des informations sur au moins l'un de l'appareil et du travailleur (101) lors de la détermination que le changement de travail s'est produit, et
détermine si le changement de travail s'est produit ou non sur la base d'un résultat de comparaison entre une valeur indiquant des informations sur au moins l'un de l'appareil et du travailleur (101) à soumettre à la détermination de détection de changement de travail et une valeur indiquant des informations sur au moins l'un de l'appareil et du travailleur (101) lors de la détermination que le changement de travail s'est produit dans un passé stocké dans la mémoire (120).

5. Appareil de support de travail selon la revendication 2, dans lequel
le processeur détermine si le travailleur (101) reconnaît ou non le changement de travail sur la base d'un résultat de comparaison de valeurs indiquant des informations sur au moins l'un de l'appareil et du travailleur (101) avant et après la détermination que le changement de travail s'est produit.

6. Appareil de support de travail selon la revendication 2, dans lequel
la mémoire (120) contient des informations de détermination de copie de changement de travail indiquant un algorithme de détermination de copie de changement de travail, et
le processeur applique une valeur indiquant des informations sur au moins l'un de l'appareil et du travailleur (101) à l'algorithme de détermination de copie de changement de travail, et exécute une détermination de reconnaissance de changement de travail pour déterminer si le travailleur (101) a été capable ou non de faire face au changement de travail, et
exécute la détermination de reconnaissance de changement de travail lors de la détermination que le changement de travail s'est produit dans la détermination de détection de changement de travail et lors de la détermination que le travailleur (101) n'a pas été capable de faire face au changement de travail dans la détermination de reconnaissance de changement de travail.

7. Appareil de support de travail selon la revendication 6, dans lequel
lorsque le processeur détermine que le changement de travail s'est produit dans la détermination de détection de changement de travail et détermine que le travailleur (101) a été capable de faire face au changement de travail dans la détermination de reconnaissance de changement de travail, le processeur n'exécute pas la détermination de reconnaissance de changement de travail et ne change pas un contenu de support de travail ayant été délivré au dispositif de sortie (160).

8. Appareil de support de travail selon la revendication 6, dans lequel
le contenu de support de travail dans les informations de support de travail inclut des informations indiquant un procédé de copie pour le changement de travail et des informations indiquant une situation du changement de travail, et
le processeur délivre, au dispositif de sortie (160), des informations indiquant un procédé de copie pour le changement de travail lorsque le processeur détermine que le travailleur (101) reconnaît le changement de travail dans la détermination de reconnaissance de changement de travail, et
délivre, au dispositif de sortie (160), des informations indiquant une situation du changement de travail lorsque le processeur détermine que le travailleur (101) ne reconnaît pas le changement de travail dans la détermination de reconnaissance de changement de travail.

9. Appareil de support de travail selon la revendication 6, dans lequel
le processeur stocke, dans la mémoire (120), une valeur indiquant des informations sur au moins l'un de l'appareil et du travailleur (101) lorsque le processeur détermine que le travailleur (101) a été capable de faire face au changement de travail et lorsque le processeur détermine que le travailleur (101) n'a pas été capable de faire face au changement de travail, et
détermine si le travailleur (101) a été capable ou non de faire face au changement de travail sur la base d'un résultat de comparaison entre une valeur indiquant des informations sur au moins l'un de l'appareil et du travailleur (101) à soumettre à la détermination de reconnaissance de changement de travail et une valeur, stockée dans la mémoire, indiquant des informations sur au moins l'un de l'appareil et du travailleur (101) lors de la détermination que le travailleur (101) a été capable de faire face au changement de travail et lors de la détermination que le travailleur (101) n'a pas été capable de faire face au changement de travail.

10. Appareil de support de travail selon la revendication 1, dans lequel
la mémoire (120) contient des informations de niveau de compétence indiquant un niveau de compétence du travailleur (101),
le contenu de support de travail dans les informations de support de travail est associé à une combinaison du résultat de détermination et du niveau de compétence, et
le processeur acquiert le niveau de compétence du travailleur (101) à partir des informations de niveau de compétence, et
délivre, au dispositif de sortie (160), le contenu de support de travail correspondant à une combinaison du niveau de compétence acquis et du résultat de détermination de la détermination de reconnaissance de changement de travail, en référence aux informations de support de travail.

11. Appareil de support de travail selon la revendication 1, dans lequel
une valeur indiquant des informations sur au moins l'un de l'appareil et du travailleur (101) inclut au moins l'une d'une valeur indiquant des informations biométriques sur le travailleur (101), d'une valeur indiquant des informations environnementales où le travailleur (101) et l'appareil sont agencés, d'une valeur indiquant des informations de manipulation sur l'appareil, et d'une valeur indiquant des informations de fonctionnement sur l'appareil.

12. Appareil de support de travail selon la revendication 11, dans lequel
des informations biométriques du travailleur (101) incluent au moins l'un de la ligne de visée du travailleur, de la pupille, du rythme cardiaque, et des ondes cérébrales,
les informations environnementales incluent au moins l'un d'une position du travailleur (101), d'un processus étant effectué par le travailleur (101), d'un son environnemental à une position où le travailleur (101) ou l'appareil est agencé, et de la température et de l'humidité à une position où le travailleur (101) ou l'appareil est agencé,
les informations de manipulation incluent au moins l'une d'informations de manipulation de bouton et d'informations de manipulation de cadran, et
les informations de fonctionnement incluent au moins l'une d'une charge sur l'appareil, d'une puissance électrique de l'appareil, d'une vibration de l'appareil, et d'une alerte délivrée par l'appareil.

13. Appareil de support de travail selon la revendication 1, dans lequel
le processeur acquiert et met à jour des informations sur au moins l'un de l'appareil et du travailleur (101) sur la base d'une performance d'une fréquence d'acquisition d'informations sur au moins l'un de l'appareil et du travailleur (101), et d'un temps de traitement à partir du moment où le processeur acquiert des informations sur au moins l'un de l'appareil et du travailleur (101) jusqu'au moment où le processeur devient possible de délivrer, au dispositif de sortie, un contenu de support de travail correspondant à un résultat de détermination de la détermination de reconnaissance de changement de travail.

14. Appareil de support de travail selon la revendication 1, dans lequel
le processeur délivre, au dispositif de sortie (160), un historique de sortie d'un contenu de support de travail ayant été délivré au dispositif de sortie (160).

15. Procédé de support de travail par un appareil de support de travail pour faire grandir un travailleur non qualifié en un travailleur qualifié sans perturber le travail du travailleur qualifié, dans lequel
l'appareil de support de travail inclut
un processeur et une mémoire (120), et est connecté à un dispositif de sortie (160),
la mémoire contient une valeur indiquant des informations sur au moins l'un d'un appareil utilisé pour un travail et d'un travailleur effectuant le travail (101),
des informations de détermination de reconnaissance de changement de travail indiquant un algorithme de détermination de reconnaissance de changement de travail, et
des informations de support de travail indiquant un contenu de support de travail correspondant à un résultat de détermination,
le procédé de support de travail étant **caractérisé par**
l'application, par le processeur, d'une valeur indiquant des informations sur au moins l'un de l'appareil et du travailleur (101) à l'algorithme de détermination de reconnaissance de changement de travail et l'exécution d'une détermination de reconnaissance de changement de travail pour déterminer si le travailleur (101) reconnaît ou non un changement de travail indiquant au moins l'un d'un changement dans un processus de travail et d'une transition entre un état normal et un état anormal d'un travail, et
la délivrance, par le processeur, au dispositif de sortie (160), d'un contenu de support de travail correspondant à un résultat de détermination de la détermination de reconnaissance de changement de travail, en référence aux informations de support de travail.
